# EUROPÄISCHE PATENTSCHRIFT

(11) **EP 1 355 821 B1**
(45) Veröffentlichungstag und Bekanntmachung des Hinweises auf die Patenterteilung: **13.10.2004**
(21) Anmeldenummer: 02740029.0
(22) Anmeldetag: 01.02.2002
(51) Int. Cl.: B62K 27/14

(54) **FAHRRADGESPANN**
BICYCLE COMBINATION
ATTELAGE DE BICYCLETTE

(30) Priorität: 02.02.2001 DE 20102028 U
(43) Veröffentlichungstag der Anmeldung: 29.10.2003
(73) Patentinhaber: Idee-1 Gmbh, 94086 Bad Griesbach (DE)
(72) Erfinder: WÜRZINGER, Vinzenz, 94130 Obernzell (DE)
(74) Vertreter: Grättinger & Partner (GbR)
(86) Internationale Anmeldenummer: PCT/EP2002/001053
(87) Internationale Veröffentlichungsnummer: WO 2002/062651

(56) Entgegenhaltungen:
- EP-A- 0 838 390
- CA-A- 2 197 501
- DE-C- 825 637
- GB-A- 224 155
- GB-A- 702 323

## Beschreibung

Die vorliegende Erfindung betrifft ein Fahrradgespann, umfassend ein Fahrrad und mindestens einen an diesem seitlich angekoppelten Beiwagen, wobei der Beiwagen über eine Koppeleinrichtung, welche verschiedene Seitenneigungen des Fahrrades relativ zur Fahrbahn zuläßt, mit dem Rahmen des Fahrrades verbunden ist. Ein derartiges Fahrradgespann wird zum Beispiel von der GB-A-702.323 gezeigt.

Im Rahmen eines gesteigerten Umwelt- und Fitnessbewußtseins erlebt das Fahrrad nicht nur als Fortbewegungsmittel, sondern auch als Transport- und Beförderungsmittel eine Renaissance. In diesem Zusammenhang gibt es verschiedene Vorschläge, den Gebrauchswert eines Fahrrades dadurch zu steigern, daß zum Transport von Gütern und/oder Personen (insbesondere Kleinkindern) an das Fahrrad Anhänger bzw. Beiwagen angekoppelt werden.

Aufgrund großer Verbreitung sind hinlänglich bekannt konventionelle zweispurige, insbesondere zur Beförderung von Kleinkindern geeignete Fahrradanhänger (vergleiche z. B. US 5785333 A). Auch ist bereits verschiedentlich vorgeschlagen worden, Kinderwagen mit einem Adapter auszurüsten, so daß sie wahlweise als herkömmlicher Kinderwagen oder aber als Fahrradanhänger eingesetzt werden können (z.B. DE 29807651 U1, DE 19818724 A1, DE 19919175 A1, US 5076599 A, US 5267744 A, US 5259634 A und US 5695208 A). Die Beförderung von Kleinkindern in an Fahrräder angekoppelten Anhängern weist indessen einige Nachteile auf. So hat der Fahrradlenker die Kleinkinder nicht im Blick, und er kann sich mit ihnen nicht unterhalten. Zudem werden Fahrradanhänger von Autofahrern mitunter übersehen, wodurch in Anhängern mitgeführte Kinder einem erhöhten Unfallrisiko ausgesetzt sind.

Die vorstehend beschriebenen Nachteile von Fahrradanhängern gelten nicht für Gespanne, welche ein Fahrrad und einen seitlich an diesem angekoppelten Beiwagen umfassen. Im Hinblick auf solche Fahrradgespanne wurde vielfach beschrieben, einen einspurigen Beiwagen - in der von Motorrädern her bekannten Weise - an ein Fahrrad anzukoppeln (z. B. DE 9104773 U1, DE 9308011 U1, DE 3915097 A1, EP 0534831 A1, DE 19816048 A1 und US 4378121 A). Dabei offenbaren die beiden zuletzt genannten Dokumente ein Fahrradgespann der gattungsgemäßen Art, bei dem das Fahrrad beim Durchfahren von Kurven nach innen in die Kurve geneigt werden kann. Hierzu ist jeweils eine spezifische gelenkige Verbindung des Beiwagens mit dem Fahrrad vorgesehen.

Bei dem aus der DE-19816048A1 bekannten Fahrradgespann ist der unbefriedigende Fahrkomfort nachteilig. Denn die in dem Beiwagen aufgenommene Last stützt sich außermittig am Rahmen des Fahrrades ab, was zu einem auf das Fahrrad um dessen Längsachse herum wirkenden Moment führt, das der Fahrer durch Gewichtsverlagerung ausgleichen muß. Die entsprechenden kinematischen Verhältnisse beeinträchtigen zudem die Verkehrssicherheit, weil mögliche sprunghafte Laständerungen (z.B. beim Überfahren von Bodenwellen) zu entsprechend starken Veränderungen des genannten, eine Seitenneigung bewirkenden Moments führen, denen der Fahrradlenker durch Ausgleichs-Lenkbewegungen entgegenwirkt.

Allen diesen Gespannen, die einen einspurigen Beiwagen umfassen, ist im übrigen der Nachteil gemein, daß eine isolierte Nutzung des vom Fahrrad abgekoppelten Beiwagens, beispielsweise als Kinderwagen, nicht möglich ist. Dies wäre allerdings vielfach wünschenswert.

Neuere Vorschläge, ein mindestens zweispuriges Fahrzeug so zu gestalten, daß es wahlweise seitlich an ein Fahrrad angekoppelt als dessen Beiwagen oder aber unabhängig hiervon, z. B. als Kinderwagen nutzbar ist, gibt es nicht. Entsprechende Überlegungen sind, soweit ersichtlich, bisher allein in der DE 3028647 A1 formuliert worden. Diesem Dokument läßt sich ein Fahrradgespann entnehmen, bei dem ein Bügel des Beiwagens starr mit dem Rahmen des Fahrrads im Bereich von dessen Hinterradgabel verbindbar ist. Bei diesem Gespann ist insbesondere der mangelhafte Fahrkomfort für den Fahrradlenker von Nachteil.

Vor dem Hintergrund des vorstehend aufgezeigten Standes der Technik liegt der vorliegenden Erfindung die Aufgabe zugrunde, ein Fahrradgespann der eingangs angegebenen Art zu schaffen, das bei einer kompakten Bauweise und der Möglichkeit, den Beiwagen unabhängig vom Fahrrad, von diesem abgekoppelt, beispielsweise als handbetätigten Kinderwagen zu nutzen, einen erhöhten Fahrkomfort für-den Lenker des Fahrradgespanns und eine gesteigerte Verkehrssicherheit gestattet.

Gelöst wird diese Aufgabe gemäß der vorliegenden Erfindung dadurch, daß der Beiwagen mehrspurig ausgeführt ist und daß die Koppeleinrichtung mindestens eine Schiebeführung umfaßt, welche zwei zueinander verschiebbare Elemente in Form eines Führungsteils einerseits und eines an diesem geführten Gleitteils andererseits aufweist, wobei eines der Elemente der Schiebeführung dem Fahrrad und das andere dem Beiwagen zugeordnet ist. Wesentlich für das erfindungsgemäβe Fahrradgespann ist somit die Ausführung der Koppeleinrichtung dergestalt, daß zum Ausgleich der unterschiedlichen Seitenneigungen des Fahrrades relativ zur Fahrbahn eine Schiebeführung vorgesehen ist, in Kombination mit dem weiteren Merkmal, wonach der Beiwagen mehrspurig ausgeführt ist. Die mehrspurige Ausführung des Beiwagens (mit mindestens drei Rädern) läßt nicht nur zu, daß dieser unabhängig vom Fahrrad, von diesem abgekoppelt, beispielsweise als Kinderwagen, genutzt werden kann; auch resultiert die mehrspurige Ausführung des Beiwagens darin, daß auf das Fahrrad auch bei erheblichen Laständerungen im Bereich des Beiwagens und/oder Fahrbahnunebenheiten keine störenden Momente um die Längsachse ausgeübt werden. Zudem gestattet die erfindungsgemäße Ausführung der Koppelungseinrichtung eine besonders kompakte Bauweise des Fahrradgespanns im Sinne einer möglichst geringen Gesamtbreite, was im Hinblick auf in einzelnen Ländern geltende Rechtsvorschriften von Bedeutung ist. Ferner ist eine solche Ausführung des Fahrradgespanns möglich, daß sich der Fahrer des Fahrrades auch beim Beiwagenbetrieb, so wie er es vom Fahren ohne Beiwagen her gewohnt ist, beim Durchfahren von Kurven nach innen in die Kurve legen kann, wobei die Lage des Beiwagens relativ zur Fahrbahnoberfläche unabhängig ist von der Schräglage des Fahrrades. Mit anderen Worten, auch dann, wenn das Fahrrad des erfindungsgemäßen Fahrradgespanns (insbesondere bei Kurvenfahrt) seitwärts geneigt ist, steht bei dem erfindungsgemäßen Fahrradgespann der Beiwagen aufrecht auf der Fahrbahn. Dies ist insbesondere bei Verwendung des Beiwagens zum Transport von Kleinkindern günstig. Denn auch im Beiwagenbetrieb bleibt der Kinderwagen auch bei Kurvenfahrt stets aufrecht, so wie dies die Kinder vom herkömmlichen Kinderwagenbetrieb her gewohnt sind. Umgekehrt braucht sich auch der Fahrer des Fahrrades nicht vom Solobetrieb auf Beiwagenbetrieb umzustellen, da er in beiden Betriebsweisen dieselbe Kurvenfahrtechnik anwenden kann.

Was die technische Realisierung der erfindungsgemäß vorgesehenen Schiebeführung angeht, so kommt in gleicher Weise deren Ausführung als Bogenführung wie auch als Geradführung in Betracht. Für die meisten Anwendungsfälle erweist sich die Gradführung als ausreichend und ist aufgrund geringerer Herstellkosten gegenüber der Bogenführung zu bevorzugen. Besonders zweckmäßig ist es dabei, wenn das Führungsteil der Schiebeführung dem Beiwagen und das Gleitteil dem Fahrrad zugeordnet ist, wobei sich das Führungsteil, sofern es nicht verschwenkbar gelagert ist (s.u.), parallel zur Hochachse des Beiwagens erstreckt. Diese Gestaltung resultiert nicht nur in einer besonders kompakten Bauweise des Fahrradgespanns. Die genannte Anordnung der Schiebeführung erweist sich darüber hinaus als günstig im Hinblick auf die Flexibilität beim Einsatz des Fahrradgespanns, das heißt der Nutzungsmöglichkeiten des isolierten Fahrrades wie auch des isolierten Beiwagens (siehe unten).

In diesem Zusammenhang ist gemäß einer bevorzugten Weiterbildung der Erfindung vorgesehen, daß der Beiwagen dreispurig ausgeführt ist, wobei ein mittiges Frontrad und zwei seitliche Heckräder vorgesehen sind. Das Frontrad sollte dabei, sofern es (auch) im Gespannbetrieb des Beiwagens auf der Fahrbahnoberfläche aufsteht, als Lenkrad ausgeführt sein, das mit entsprechendem Nachlauf um eine Hochachse drehbar gelagert ist, so daß es bei Kurvenfahrt des Gespanns selbsttätig diejenige Stellung einnimmt, in der es nicht auf der Fahrbahnoberfläche radiert. Unabhängig davon, welche Ausführung für das Frontrad des Beiwagens gewählt wird, liegen die Aufstandspunkte der beiden Heckräder des Beiwagens bevorzugt vor dem Aufstandspunkt des Hinterrades des Fahrrades. Dies ist besonders günstig im Hinblick auf die Fahreigenschaften des Gespanns. Allerdings ist auch eine Lage der Aufstandspunkte der Heckräder geringfügig hinter dem Aufstandspunkt des Hinterrades des Fahrrads im Hinblick auf die Fahreigenschaften des Gespanns unkritisch.

Ein bedeutender Vorteil der vorliegenden Erfindung ist nach dem vorstehend Gesagten darin zu sehen, daß sie sich ohne weiteres auf moderne, handelsübliche Buggys anwenden läßt, ohne daß diese herstellerseitig speziell für den Beiwagenbetrieb vorbereitet werden müßten. Vielmehr lassen sich entsprechend der vorliegenden Erfindung mittels einer geeigneten Koppeleinrichtung entsprechende Buggys ohne weiteres mit handelsüblichen Fahrrädern zu erfindungsgemäßen Gespannen verbinden. Vor diesem Hintergrund wird Schutz ergänzend beansprucht für eine entsprechende Koppeleinrichtung zum Verbinden eines Beiwagens seitlich mit dem Rahmen eines Fahrrades.

Eine andere bevorzugte Weiterbildung der Erfindung zeichnet sich dadurch aus, daß die Koppeleinrichtung einen Bügel umfaßt, der mit dem Rahmen des Fahrrades an mindestens zwei Punkten starr verbunden ist. "Starr" ist in diesem Zusammenhang nicht zu verwechseln mit "unlösbar". Denn gerade eine leicht, möglichst ohne Werkzeug lösbare Verbindung des Bügels mit dem Rahmen des Fahrrades ist besonders günstig, um rasch zwischen Gespannbetrieb des Fahrrades einerseits und Solobetrieb andererseits wechseln zu können. In diesem Sinne bedeutet "starr", daß nach seiner Montage der Bügel nicht mehr relativ zum Rahmen des Fahrrades bewegbar ist.

Besonders bevorzugt läßt sich der Bügel an dem Rahmen des Fahrrades an genau zwei Punkten montieren, wobei eine hintere Befestigung an der Hinterradeinspannung des Fahrrades und eine vordere Befestigung an dem Unterzug des Fahrrades, der Sattelstütze, der Hinterradgabel oder an anderen geeigneten Punkten des Rahmens besonders günstig ist. Die Befestigung des Bügels am Unterzug des Rahmens ist unter kinematischen Gesichtspunkten vorteilhaft, weil sie zu einer besonders steifen Kopplung des Beiwagens mit dem Fahrrad führt; demgegenüber führen die beiden anderen Befestigungen des Bügels zu keiner wesentlichen Beeinträchtigung der Bewegungsfreiheit des Lenkers des Fahrrades. In diesem Sinne ist zweckmäßigerweise am hinteren Ende des Bügels ein Befestigungselement angeordnet, das zum Anschluß des Bügels an die Hinterradeinspannung des Fahrrades geeignet ist. Und am vorderen Ende des Bügels ist zweckmäßigerweise eine Klemmeinrichtung vorgesehen, mit welcher sich der Bügel an dem Unterzug des Fahrrades, der Sattelstütze oder der Hinterradgabel montieren läßt.

Der vorstehend erläuterte Bügel ist gemäß einer anderen Weiterbildung der Erfindung aus mindestens zwei Teilstücken zusammengefügt, deren Position relativ zueinander einstellbar ist, beispielsweise über eine Teleskopführung. Besonders bevorzugt ist der Bügel aus drei Teilstücken zusammengefügt, wobei die Position jeweils zweier miteinander verbundener Teilstücke relativ zueinander einstellbar ist. Dies ermöglicht eine universelle Anpassung des Bügels an unterschiedliche Fahrräder, deren Rahmen hinsichtlich ihrer Bauweisen und/oder Abmessungen voneinander abweichen.

Während die Verbindung des Beiwagens mit dem Rahmen des Fahrrades mittels des vorstehend erläuterten Bügels insbesondere im Hinblick auf die vom Fahrrad auf den Beiwagen übertragbaren Lenk-, Brems- und Beschleunigungskräfte besonders günstig ist und die Verwendung eines Kinderwagens ohne lenkbares Vorderrad als Beiwagen ermöglicht, indem nämlich der Beiwagen vorne so weit angehoben wird, daß das Vorderrad keinen Bodenkontakt mehr hat, zeichnet sich eine andere bevorzugte Weiterbildung der Koppeleinrichtung durch einen besonders geringen baulichen Aufwand sowie eine besonders geringe Beeinträchtigung der Bewegungsfreiheit des Fahrradlenkers aus. Gemäß dieser im Hinblick auf die Ausführung der Koppeleinrichtung zweiten bevorzugten Ausführungsform des erfindungsgemäßen Fahrradgespanns umfaßt die Koppeleinrichtung ein Anschlußteil, das eine im Bereich der Hinterradeinspannung mit dem Rahmen des Fahrrades verbundene Anschlußplatte aufweist. Mit der Anschlußplatte ist dabei insbesondere ein erster, von der Anschlußplatte seitwärts abstehender Verbindungsvorsprung fest verbunden, welcher lösbar mit einem zweiten, korrespondierenden Verbindungsvorsprung verbunden ist, der mit dem fahrradseitigen Element der Schiebeführung in Verbindung steht.

Die beiden zueinander korrespondierenden, miteinander lösbar verbindbaren Verbindungsvorsprünge können dabei insbesondere als Zapfen und Hülse, welche ineinandergreifen, ausgeführt sein. Wird der Beiwagen von dem Fahrrad abgekoppelt, so wird die Verbindung der beiden Verbindungsvbrsprünge getrennt. Am Fahrrad verbleibt die Anschlußplatte mit dem zugeordneten Anschlußvorsprung, womit keinerlei Beeinträchtigung des Fahrradlenkers oder gar Beschränkung von dessen Bewegungsfreiheit und/ oder Verletzungsrisiko verbunden ist.

Allerdings erfordert diese Art und Weise der Ankopplung des Beiwagens an das Fahrrad, daß das mindestens eine Vorderrad des Beiwagens in dem weiter oben beschriebenen Sinne lenkbar ist; denn mit der vorstehend beschriebenen Koppeleinrichtung läßt sich im allgemeinen nicht eine solche Kraft vom Fahrrad auf den Beiwagen übertragen, daß dessen mindestens eines Vorderrad außer Kontakt mit der Fahrbahn gebracht wird.

Gemäß einer anderen bevorzugten Weiterbildung der Erfindung wirkt zwischen dem fahrradseitigen Element der Schiebeführung und dem Rahmen des Beiwagens einen Federelement, welches den Beiwagen auf seiner dem Fahrrad zugewandten Seite an die Fahrbahn andrückt. Ein solches Federelement dient der Stabilisierung des Beiwagens insbesondere in Fällen, in denen dieser einen relativ hohen Schwerpunkt aufweist, und verhindert insbesondere, daß dieser sich in scharf gefahrenen Kurven fliehkraftbedingt nach außen neigt.

Sofern der Beiwagen zum Transport schwerer Güter vorgesehen ist, kann mindestens einem der Räder des Beiwagens eine Bremseinrichtung zugeordnet sein. Weitere Ausgestaltungen können beispielsweise vorsehen, daß mindestens eines der Räder des Beiwagens motorisch angetrieben ist, wobei als Antriebsmotor insbesondere ein Elektromotor in Betracht kommt, der von einer im Beiwagen angeordneten Batterie gespeist wird. Darüber hinaus kann im Rahmen der Erfindung vorgesehen sein, daß ein Fahrrad zur Steigerung der Beförderungskapazität mit zwei Beiwagen ausgerüstet ist, nämlich einem linken Beiwagen und einem rechten Beiwagen, wobei insbesondere eine symmetrische Ankoppelung der beiden Beiwagen an dem Fahrrad in Betracht kommt.

Im Folgenden wird die vorliegende Erfindung anhand zweier in der Zeichnung veranschaulichter bevorzugter Ausführungsbeispiele näher erläutert. Dabei zeigt
- Fig. 1: in rückwärtiger Ansicht eine erste bevorzugte Ausführungsform eines Fahrradgespanns nach der vorliegenden Erfindung,
- Fig. 2: in Ansicht schräg von oben ein Detail der bei dem Gespann nach Fig. 1 eingesetzten Koppelungseinrichtung,
- Fig. 3: in Seitenansicht den bei einer zweiten bevorzugten Ausführungsform der vorliegenden Erfindung, einsetzbaren Beiwagen,
- Fig. 4: in vergrößerter Ansicht schräg von hinten Einzelheiten der mit dem Beiwagen nach Fig. 3 verbundenen Komponenten der Kopplungseinrichtung und
- Fig. 5: schräg von vorne Einzelheiten der mit dem Fahrrad, welches mit dem Beiwagen nach Fig. 3 zu einem erfindungsgemäßen Gespann koppelbar ist, verbundenen Komponenten der Kopplungseinrichtung.

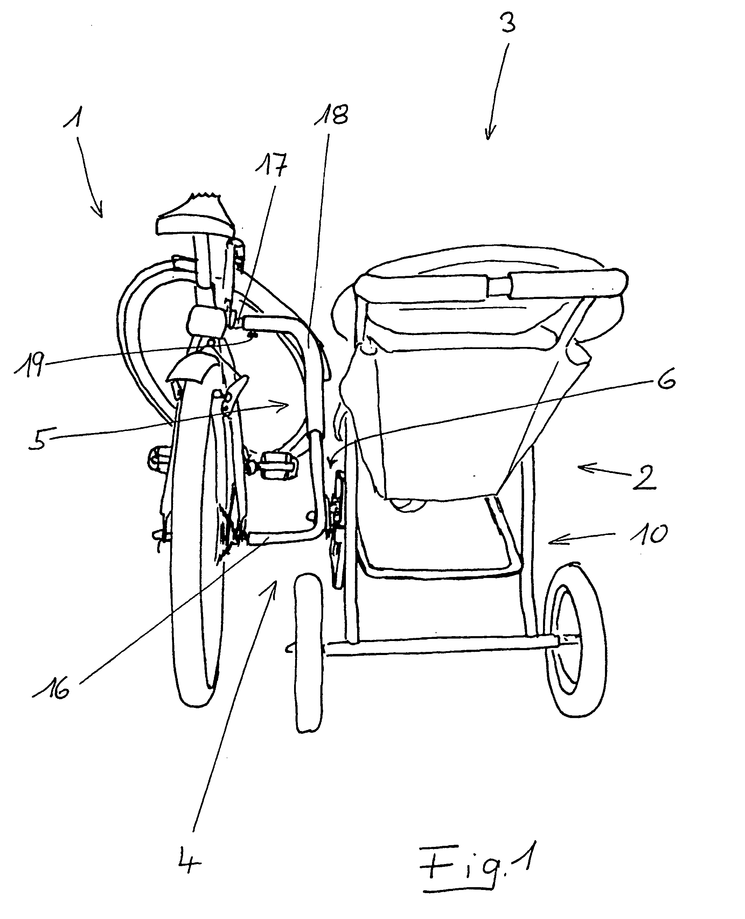

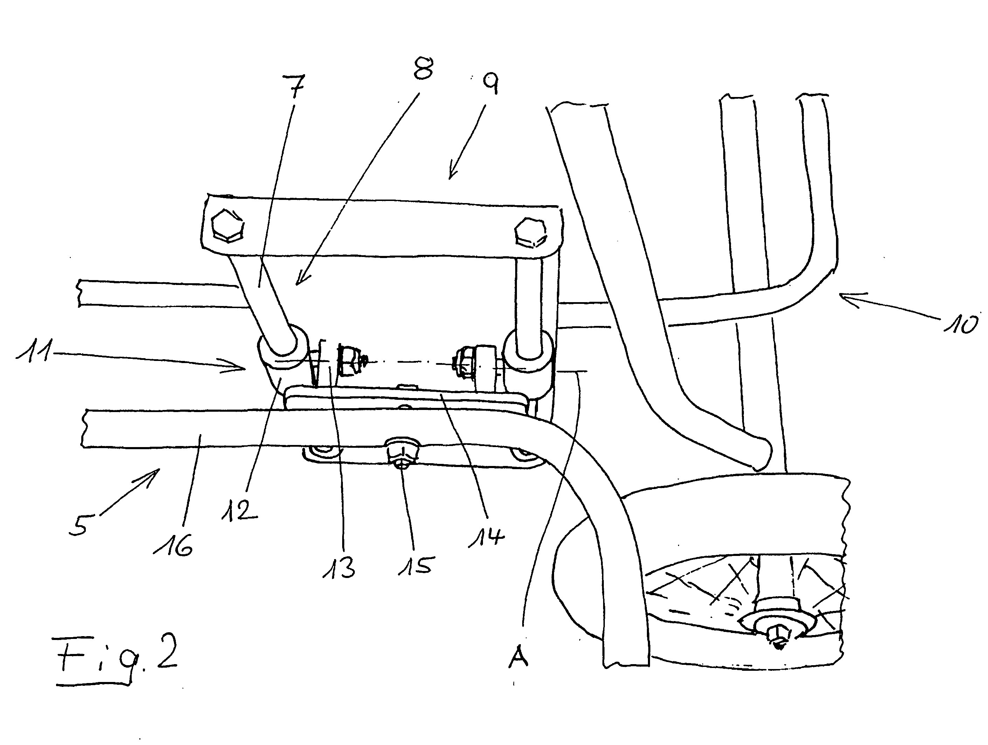

Das in Fig. 1 und 2 der Zeichnung veranschaulichte Fahrradgespann umfaßt ein schematisch und nur zum Teil dargestelltes handelsübliches Herrenfahrrad 1 und einen-ebenfalls schematisch dargestellten - handelsüblichen dreirädrigen, für den Transport eines Kleinkinds ausgelegten Buggy 2. Zum Betrieb des Buggys 2 als Beiwagen 3 ist dieser mit dem Fahrrad 1 über eine Koppeleinrichtung 4 verbunden.

Die Koppeleinrichtung 4 umfaßt einen Bügel 5 und eine Schiebeführung 6. Die Schiebeführung 6 ist als Geradführung ausgeführt. Sie umfaßt zwei als Führungsstangen 7 ausgeführte Führungsteile 8. Die Führungsstangen 7 sind parallel zueinander in einem Rahmenteil 9 eingespannt, das fest mit dem Rahmen 10 des Beiwagens 3 verbunden ist, und zwar derart, daß sich die beiden Führungsstangen 7 in vertikaler Richtung, parallel zur Hochachse des Beiwagens erstrecken.

Auf jeder der beiden Führungsstangen 7 ist ein Gleitteil 11 in Form einer Gleithülse 12 verschiebbar geführt. Jede der Gleithülsen 12 ist - um dieselbe Achse A verschwenkbar - gelenkig verbunden mit einer Lasche 13, wobei die beiden Laschen 13 wiederum fest mit dem Anschlußblech 14 verbunden sind. Das Anschlußblech 14 ist mittels einer Schraube mit dem Bügel 5 fest verbunden

Als eine günstige Alternative zu der vorstehend beschriebenen Ausgestaltung der Schiebeführung 6 kommt in Betracht, daß das Rahmenteil 9 um eine horizontale, sich in Längsrichtung des Beiwagens 3 erstreckende Achse verschwenkbar mit dem Rahmen 10 des Beiwagens 3 verbunden ist; in diesem Falle können die Gleithülsen 12 starr mit den Laschen 13 verbunden, insbesondere verschweißt sein, da sich in diesem Falle infolge der gelenkigen Verbindung des Rahmenteiles 9 mit dem Rahmen 10 des Beiwagens 3 die Führungsstangen 7 parallel zum Fahrrad neigen können.

Der Bügel 5 ist mit dem Rahmen des Fahrrades 1 starr verbunden, wobei zur Verbindung ohne Werkzeug lösbare Schnellbefestigungselemente vorgesehen sind. In diesem Sinne ist im Bereich des hinteren Endes des Bügels 5 ein Befestigungselement zum Anschluß des Bügels an die Hinterradeinspannung des Fahrrades 1 vorgesehen. Und am vorderen Ende des Bügels 5 ist eine Klemmeinrichtung vorgesehen, die in Form einer Klemmschelle den Bügel 5 starr mit dem Unterzug des Rahmens des Fahrrades verbindet.

Der Bügel 5 ist aus drei Teilstücken zusammengefügt, nämlich einem hinteren Teilstück 16, einem vorderen Teilstück 17 und einem diese beiden Teilstücke miteinander verbindenden Bogen 18. Die Verbindung des Bogens 18 mit jedem der beiden Teilstücke 16 und 17 des Bügels 5 ist dabei teleskopisch verschiebbar und verdrehbar, so daß der Bügel 5 hinsichtlich seiner Form an beliebig gestaltete Rahmen angepaßt werden kann. Insbesondere läßt sich auf diese Weise eine Form des Bügels 5 dergestalt vorgeben, daß sich derjenige Bereich des Bügels 5, mit dem das Anschlußteil 14 verbunden ist, im wesentlichen parallel zur Fahrbahn und parallel zur Längsmittelebene des Fahrrades erstreckt. Die entsprechende Raumform des Bügels läßt sich mittels zweier Klemmschrauben 19 fixieren, so daß der Bügel 5 auch nach einer Demontage seine an das betreffende Fahrrad angepaßte Gestalt beibehält.

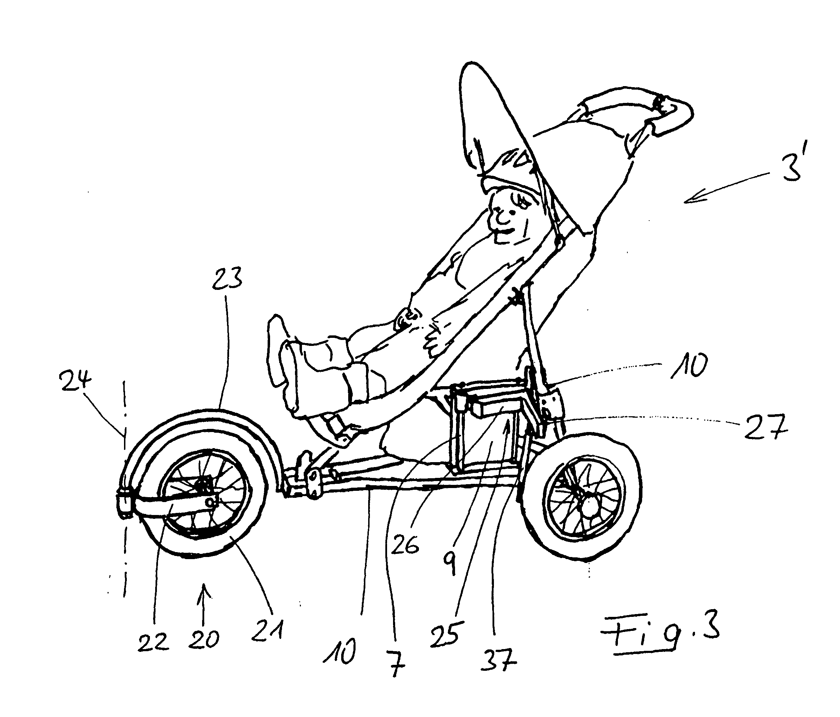

Die Figuren 3 bis 5 der Zeichnung betreffen eine alternative Ausführung des erfindungsgemäßen Fahrradgespanns, welches sich insbesondere dadurch auszeichnet, daß das Vorderrad 20 des als im übrigen handelsüblicher Kinderwagen-Buggy ausgeführten Beiwagens 3' als Lenkrad 21 ausgeführt ist, so daß der Buggy im Beiwagenbetrieb mit seinen drei Rädern auf der Fahrbahn aufstehen kann. Hierzu ist das Vorderrad 20 in einer Gabel 22, welche an dem mit dem Rahmen 10 des Beiwagens 3' fest verbundenen Bügel 23 um die vertikale Achse 24 schwenkbar gelagert ist, aufgenommen.

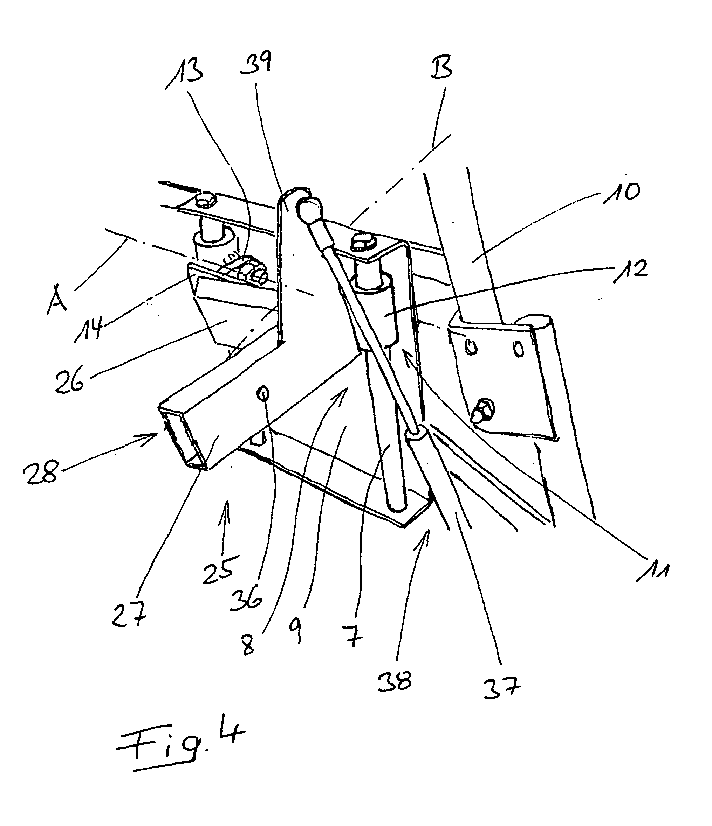

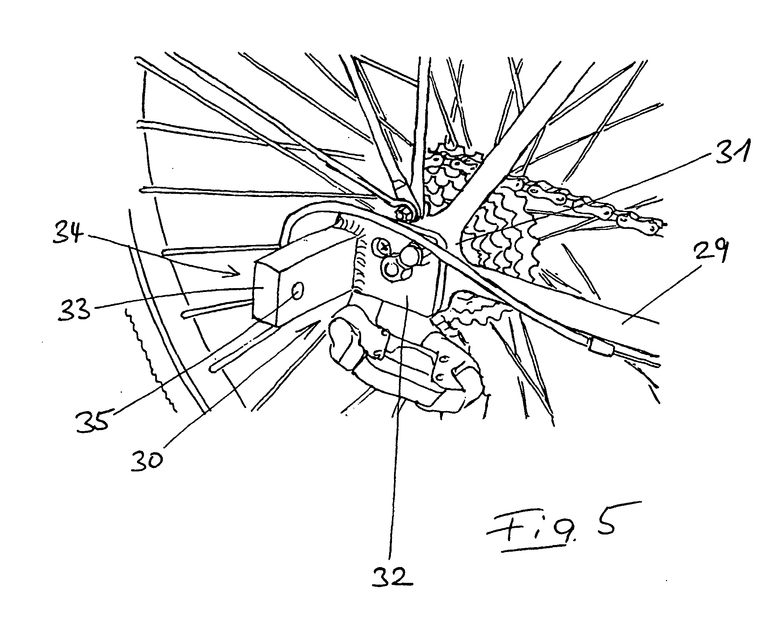

Zur Ankopplung des Beiwagens 3' an das Fahrrad dient die nachstehend unter Bezugnahme auf die Figuren 4 und 5 näher erläuterte Koppeleinrichtung. Diese umfaßt ein fest mit dem Rahmen 10 des Beiwagens verbundenes Rahmenteil 9, in das zwei zueinander parallele, vertikal ausgerichtete Führungsstangen 7 eingespannt sind. Auf jeder der Führungsstangen 7 ist eine Gleithülse 12 verschiebbar geführt. Jede der Gleithülsen 12 ist - um die gemeinsame Achse A schwenkbar - gelenkig mit einer Lasche 13 verbunden, wobei die beiden Laschen 13 wiederum fest mit dem Anschlußblech 14 verbunden sind.

Mit dem Anschlußblech 14 ist ein Winkelrohr 25 mit einem Rechteckquerschnitt verbunden. Ein erster Schenkel 26 des Winkelrohres liegt dabei an dem Anschlüßblech 14 an; der andere Schenkel 27 des Winkelrohres 25 steht in Richtung auf das Fahrrad seitwärts von dem ersten Schenkel 26 ab und bildet auf diese Weise einen hülsenartigen Verbindungsvorsprung 28. Die Verbindung des Schenkels 26 des Winkelrohres 25 mit dem Anschlußblech 14 ist dabei dergestalt, daß beide Teile um die quer zur Achse A verlaufende Achse B gegeneinander verdrehbar sind. Dies ermöglicht, daß der Beiwagen 3' - insbesondere bei Fahrbahnunebenheiten - Nickbewegungen relativ zum Fahrrad ausführen kann.

Mit dem Rahmen 29 des Fahrrads ist im Bereich der Hinterradeinspannung ein Anschlußteil 30 verbunden. Dieses umfaßt eine mit dem hinteren Rahmendreieck 31 verschraubte Anschlußplatte 32 und einen mit dieser verschweißten Zapfen 33. Der Zapfen 33 steht dabei seitwärts in Richtung auf den Beiwagen von der Anschlußplatte 32 ab. Er bildet einen zu dem durch den Schenkel 27 des Winkelrohres 25 gebildeten Verbindungsvorsprung 28 korrespondierenden Verbindungsvorsprung 34. Hierzu hat der Zapfen 33 einen Rechteckquerschnitt, der so dimensioniert ist, daß der Zapfen 33 spielfrei in den Schenkel 27 des Winkelrohres 25 eingreifen kann.

Den Zapfen 33 durchdringt eine Bohrung 35; und der Schenkel 27 des Winkelrohres 25 weist eine Bohrung 36 auf.

Wird die Verbindung zwischen dem Fahrrad und dem Beiwagen dadurch hergestellt, daß der Zapfen 33 in den Schenkel 25 des Winkelrohres 27 eingeführt wird, so läßt sich die Stellung der beiden Verbindungsvorsprünge 28 und 34 zueinander durch eine die beiden Bohrungen 35 und 36 durchsetzende Schraube sichern. Erkennbar ist somit das Ankoppeln des Beiwagens an das Fahrrad und das Abkoppeln des Beiwagens von dem Fahrrad mit nur minimalem Aufwand möglich, wobei das Fahrrad bei abgekoppeltem Beiwagen ohne jegliche Beeinträchtigung des Fahrradlenkers benutzt werden kann. Auch der Beiwagen 3' läßt sich in seinem von dem Fahrrad abgekoppeltem Zustand ohne jegliche Beeinträchtigung als "normaler" Kinderwagen benutzen.

Zur Stabilisierung des Fahrverhaltens ist ein als Gasdruckfeder 37 ausgeführtes Federelement 38 vorgesehen, das einerseits an einer mit dem Winkelrohr 25 fest verbundenen Lasche 39 und andererseits nahe an dem linken Hinterrad des Beiwagens 3' an dessen Rahmen 10 angelenkt ist. Die Gasdruckfeder 37 erhöht auf diese Weise die Auflagekraft insbesondere des dem Fahrrad zugewandten Hinterrads des Beiwagens auf der Fahrbahn.

## Patentansprüche

1. Fahrradgespann, umfassend ein Fahrrad (1) und mindestens einen an diesem seitlich angekoppelten Beiwagen (3,3'), wobei der Beiwagen (3,3') über eine Koppeleinrichtung (4), welche verschiedene seitenneigungen des Fahrrades (1) relativ zur Fahrbahn zuläßt, mit dem Rahmen (29) des Fahrrades (1) verbunden ist,
**dadurch gekennzeichnet,**
**daß** der Beiwagen (3,3') mehrspurig ausgeführt ist und daß die Koppeleinrichtung (4) mindestens eine Schiebeführung (6) umfaßt, welche zwei zueinander verschiebbare Elemente in Form eines Führungsteils: (8) einerseits und eines an diesem geführten Gleitteils (11) andererseits aufweist, wobei eines der Elemente der Schiebeführung dem Fahrrad (1) und das andere dem Beiwagen (3,3') zugeordnet ist.

2. Fahrradgespann nach Anspruch 1,
**dadurch gekennzeichnet,**
**daß** die Schiebeführung als Geradführung ausgeführt ist.

3. Fahrradgespann nach Anspruch 1 oder 2,
**dadurch gekennzeichnet,**
**daß** das Führungsteil (8) dem Beiwagen (3,3') zugeordnet ist.

4. Fahrradgespann nach Anspruch 3,
**dadurch gekennzeichnet,**
**daß** das Führungsteil (8) starr mit dem Rahmen (10) des Beiwagens (3,3') verbunden und parallel zu dessen Hochachse angeordnet ist.

5. Fahrradgespann nach Anspruch 3,
**dadurch gekennzeichnet,**
**daß** das Führungsteil (8) um eine horizontale, sich in Längsrichtung des Beiwagens (3,3') erstreckende Achse verschwenkbar mit dem Rahmen (10) des Beiwagens (3,3') verbunden ist.

6. Fahrradgespann nach einem der Ansprüche 1 bis 5,
**dadurch gekennzeichnet,**
**daß** die Koppeleinrichtung (4) einen Bügel (5) umfaßt, der mit dem Rahmen (29) des Fahrrades (1) an mindestens zwei Punkten starr verbunden ist.

7. Fahrradgespann nach Anspruch 6,
**dadurch gekennzeichnet,**
**daß** der Bügel (5) aus mindestens zwei Teilstükken (16, 17, 18) zusammengefügt ist, deren Position relativ zueinander einstellbar ist.

8. Fahrradgespann nach Anspruch 7,
**dadurch gekennzeichnet,**
**daß** das hinterste (16) der mindestens zwei Teilstücke (16, 17, 18) des Bügels (5) ein Befestigungselement zum Anschluß des Bügels (5) an die Hinterradeinspannung des Fahrrades (1) aufweist.

9. Fahrradgespann nach Anspruch 7 oder 8,
**dadurch gekennzeichnet,**
**daß** das vorderste (17) der mindestens zwei Teilstücke (16, 17, 18) des Bügels (5) eine zur Verbindung mit dem Unterzug des Fahrrades (1) geeignete Klemmeinrichtung aufweist.

10. Fahrradgespann nach einem der Ansprüche 1 bis 5,
**dadurch gekennzeichnet,**
**daß** die Koppeleinrichtung ein Anschlußteil (30) umfaßt, das eine im Bereich der Hinterradeinspannung mit dem Rahmen (29) des Fahrrads (1) verbundene Anschlußplatte (32) aufweist.

11. Fahrradgespann nach Anspruch 10,
**dadurch gekennzeichnet,**
**daß** mit der Anschlußplatte (32) ein von der Anschlußplatte seitwärts abstehender Verbindungsvorsprung (34) fest verbunden ist, welcher lösbar mit einem korrespondierenden Verbindungsvorsprung (28) verbunden ist, der mit dem fahrradseitigen Element der Schiebeführung (6) in Verbindung steht.

12. Fahrradgespann nach einem der Ansprüche 1 bis 11,
**dadurch gekennzeichnet,**
**daß** zwischen dem fahrradseitigen Element der Schiebeführung (6) und dem Rahmen (10) des Beiwagens (3,3') ein Federelement (38) wirkt, welches den Beiwagen (3,3') auf seiner dem Fahrrad (1) zugewandten Seite an die Fahrbahn drückt.

13. Fahrradgespann nach einem der Ansprüche 1 bis 12,
**dadurch gekennzeichnet,**
**daß** der Beiwagen (3,3') dreispurig ausgeführt ist, wobei ein mittiges Frontrad (20) und zwei seitliche Heckräder vorgesehen sind.

14. Fahrradgespann nach Anspruch 13,
**dadurch gekennzeichnet,**
**daß** die Aufstandspunkte der beiden Heckräder des Beiwagens vor dem Aufstandspunkt des Hinterrades des Fahrrades (1) liegen.

15. Fahrradgespann nach Anspruch 13 oder Anspruch 14,
**dadurch gekennzeichnet,**
**daß** das Frontrad (20) als Lenkrad (21) ausgeführt. ist.

16. Fahrradgespann nach einem der Ansprüche 1 bis 15,
**dadurch gekennzeichnet,**
**daß** mindestens einem der Räder des Beiwagens eine Bremseinrichtung zugeordnet ist.

## Claims

1. Bicycle carriage comprising a bicycle (1) and at least one sidecar (3, 3') coupled to the side of the same, whereby the sidecar (3, 3') incorporates a coupling means (4) which permits various different side inclination angles of the bicycle (1) relative to the road, and which is connected with the frame (29) of the bicycle (1), **characterised in that** the sidecar (3, 3') incorporates several tracks, and **in that** the coupling means (4) incorporates at least one guide rail (6) which incorporates two elements in the form of a slide part (8) that can be slidingly offset from one another on the one hand, and a guide part (11) carried on the same on the other hand, whereby one of the elements of the guide rail is associated with the bicycle (1) and the other with the sidecar (3, 3').

2. Bicycle carriage according to Claim 1, **characterised in that** the guide rail takes the form of a straight guide.

3. Bicycle carriage according to Claim 1 or 2, **characterised in that** the guide part (8) is associated with the sidecar (3, 3').

4. Bicycle carriage according to Claim 3, **characterised in that** the guide part (8) is fixedly connected to the frame (10) of the sidecar (3, 3') and extends parallel to the vertical axis of the same.

5. Bicycle carriage according to Claim 3, **characterised in that** the guide part (8) is tiltably connected with the frame (10) of the sidecar (3, 3') around a horizontal axis extending in a longitudinal direction of the sidecar (3, 3').

6. Bicycle carriage according to one of the preceding Claims 1 to 5, **characterised in that** the coupling means (4) incorporates a bar (5) which is fixedly connected to the frame (29) of the bicycle (1) at least at two points.

7. Bicycle carriage according to Claim 6, **characterised in that** the bar (5) consists of at least two part sections (16, 17, 18) whose positions are adjustable relative to one another.

8. Bicycle carriage according to Claim 7, **characterised in that** the rearmost (16) of the at least two part sections (16, 17, 18) of the bar (5) incorporates a fitting element for the connection of the bar (5) to the rear wheel suspension of the bicycle (1).

9. Bicycle carriage according to Claim 7 or 8, **characterised in that** the frontmost (17) of the at least two part sections (16, 17, 18) of the bar (5) incorporates a clamping means suitable for a connection with the underside of the bicycle (1).

10. Bicycle carriage according to one of the preceding Claims 1 to 5, **characterised in that** the coupling means incorporates a connecting part (30) which in turn incorporates a connecting plate (32) connected with the frame (29) of the bicycle (1) within the area of the rear wheel suspension.

11. Bicycle carriage according to Claim 10, **characterised in that** a connecting projection (34) projecting from the side of the connecting plate is fixedly connected with the connecting plate (32), whereby the same is disconnectably connected with a corresponding connecting projection (28), which is in turn connected with an element of the guide rail(6) on the bicycle side.

12. Bicycle carriage according to one of the preceding Claims 1 to 11, **characterised in that** a spring element (38) acts between the element of the guide rail (6) on the bicycle side and the frame (10) of the sidecar (3, 3'), whereby the same presses the sidecar (3, 3') onto the road surface on the side that faces the bicycle (1).

13. Bicycle carriage according to one of the preceding Claims 1 to 12, **characterised in that** the sidecar (3, 3') incorporates three tracks, whereby a central front wheel (20) and two rear side wheels are envisaged.

14. Bicycle carriage according to Claim 13, **characterised in that** the positioning points of the two rear wheels of the sidecar are located in front of the positioning point of the rear wheel of the bicycle (1).

15. Bicycle carriage according to Claim 13 or Claim 14, **characterised in that** the front wheel (20) takes the form of a steering wheel (21).

16. Bicycle carriage according to one of the preceding Claims 1 to 15, **characterised in that** at least one of the wheels of the sidecar is associated with a braking means.

## Revendications

1. Attelage de bicyclette comprenant une bicyclette (1) et au moins une voiturette latérale (3, 3') couplée latéralement à celle-ci, la voiturette latérale (3, 3') étant couplée au cadre (29) de la bicyclette (1) par l'intermédiaire d'un dispositif de couplage (4) qui permet différentes inclinaisons latérales de la bicyclette (1) par rapport à la chaussée, **caractérisé par le fait que** la voiturette latérale (3, 3') est du type à plusieurs roues et que le dispositif de couplage (4) comprend au moins un moyen de guidage coulissant (6), qui présente deux éléments pouvant coulisser l'un par rapport à l'autre, sous la forme d'un élément glissière (8) d'une part et d'un élément coulisseau (11) d'autre part, l'un des éléments du moyen de guidage coulissant étant associé à la bicyclette (1) et l'autre élément à la voiturette latérale (3, 3').

2. Attelage de bicyclette selon la revendication 1, **caractérisé par le fait que** le moyen de guidage coulissant est conformé en glissière droite.

3. Attelage de bicyclette selon la revendication 1 ou 2, **caractérisé par le fait que** l'élément glissière (8) est associé à la voiturette latérale (3, 3').

4. Attelage de bicyclette selon la revendication 3, **caractérisé par le fait que** l'élément glissière (8) est lié rigidement au châssis (10) de la voiturette latérale (3, 3') et est disposé parallèlement à l'axe vertical de celle-ci.

5. Attelage de bicyclette selon la revendication 3, **caractérisé par le fait que** l'élément glissière (8) est lié au châssis (10) de la voiturette latérale (3, 3') avec possibilité de pivotement autour d'un axe horizontal qui s'étend dans la direction longitudinale de ladite voiturette latérale (3, 3').

6. Attelage de bicyclette selon une des revendications 1 à 5, **caractérisé par le fait que** le dispositif de couplage (4) comprend une pièce en étrier (5) qui est liée rigidement au cadre (29) de la bicyclette (1), en au moins deux points.

7. Attelage de bicyclette selon la revendication 6, **caractérisé par le fait que** la pièce en étrier (5) est formée d'au moins deux pièces élémentaires (16, 17, 18) dont les positions réciproques sont réglables.

8. Attelage de bicyclette selon la revendication 7, **caractérisé par le fait que** la pièce élémentaire (16) la plus reculée parmi les deux pièces élémentaires (16, 17, 18) de la pièce en étrier (5) comporte un élément de fixation pour relier la pièce en étrier (5) à la chape de roue arrière de la bicyclette (1).

9. Attelage de bicyclette selon la revendication 7 ou 8, **caractérisé par le fait que** la pièce élémentaire (17) la plus avancée parmi les deux pièces élémentaires (16, 17, 18) de la pièce en étrier (5) comporte un dispositif de serrage adapté pour sa fixation au tube oblique de la bicyclette (1).

10. Attelage de bicyclette selon une des revendications 1 à 5, **caractérisé par le fait que** le dispositif de couplage comprend un élément d'attache (30) qui présente une patte d'attache (32) liée au cadre (29) de la bicyclette (1), dans la région de la chape de roue arrière.

11. Attelage de bicyclette selon la revendication 10, **caractérisé par le fait qu'**une saillie de liaison (34) qui s'étend latéralement sur la patte d'attache est solidaire de la patte d'attache (32), laquelle saillie de liaison peut être liée de manière séparable à une saillie de liaison (28) correspondante liée à l'élément côté bicyclette du moyen de guidage coulissant (6).

12. Attelage de bicyclette selon une des revendications 1 à 11, **caractérisé par le fait qu'**entre l'élément côté bicyclette du moyen de guidage coulissant (6) et le châssis (10) de la voiturette latérale (3, 3') agit un élément élastique (38) qui presse la voiturette latérale (3, 3') sur la chaussée du côté tourné vers la bicyclette (1).

13. Attelage de bicyclette selon une des revendications 1 à 12, **caractérisé par le fait que** la voiturette latérale (3, 3') est à trois roues, une roue avant (20) centrale et deux roues arrières latérales étant prévues.

14. Attelage de bicyclette selon la revendication 13, **caractérisé par le fait que** les points de contact des deux roues arrières de la voiturette latérale sont situés devant le point de contact de la roue arrière de la bicyclette (1).

15. Attelage de bicyclette selon la revendication 13 ou 14, **caractérisé par le fait que** la roue avant (20) est conformée en roue directrice (21).

16. Attelage de bicyclette selon une des revendications 1 à 15, **caractérisé par le fait qu'**à au moins une des roues de la voiturette latérale est associé un dispositif de freinage.
